# EUROPÄISCHE PATENTSCHRIFT

(11) **EP 1 563 927 B1**
(45) Veröffentlichungstag und Bekanntmachung des Hinweises auf die Patenterteilung: **07.11.2007**
(21) Anmeldenummer: 04290404.5
(22) Anmeldetag: 13.02.2004
(51) Int. Cl.: B21J 9/02, B21K 21/14, F16F 1/38

(54) **Verfahren zum Umformen eines Endbereichs einer starren Hülse, Werkzeug zum Umformen und elastische Gelenke**
Method of forming the end region of a rigid sleeve, forming tool, and elastic articulation
Méthode de formage de l'extrêmité d'une douille rigide, outil de formage et articulation élastique

(43) Veröffentlichungstag der Anmeldung: 17.08.2005
(60) Teilanmeldung: 07007708.6
(73) Patentinhaber: Michelin AVS S.A.S., 58302 Decize Cedex (FR)
(72) Erfinder: Ducloux, Antoine, 63670 La Roche Blanche (FR); Dupuis, Frédéric, 58000 Never (FR); Skiera, Jean-François, 58340 Cercy-La-Tour (FR); Charnotet, Thierry, 58300 St. Leger des Vignes (FR)
(74) Vertreter: Weber-Bruls, Dorothée

(56) Entgegenhaltungen:
- EP-A- 0 250 272
- EP-A- 1 219 853
- EP-A- 1 386 677
- EP-B- 0 524 844
- WO-A-02/070170
- US-A- 5 806 166
- US-B1- 6 370 776

## Beschreibung

Die Erfindung betrifft ein Verfahren zum Umformen eines Endbereichs einer starren Hülse eines elastischen Gelenks, wobei ein Formwerkzeug zum Aufbringen einer Umformkraft an dem Endbereich angesetzt und um eine gegenüber einer Axialrichtung der Hülse geneigte Rotationsachse auf dem Endbereich abrollend gedreht wird derart, daß der Endbereich in Radialrichtung der Hülse verformt wird.

Ein gattungsgemäßes Umformverfahren ist aus dem EP 0 524 844 B1 bekannt. Bei dem bewährten Umformverfahren, das auch unter der Bezeichnung "Bouterollage-Technik" bekannt ist, kann das Montageende einer Innenhülse auch dann verbreitend verformt werden, wenn bereits eine elastomere Zwischenschicht auf der Innenhülse anvulkanisiert ist. Mit der bekannten Umformtechnik ist es möglich, das Hülsenende lokal begrenzt umzuformen, ohne den gesamten Hülsenkörper zu stark stauchend zu belasten. Das für den Umformvorgang verwendete Formwerkzeug, eine Art Nietkopfwerkzeug, rollt an dessen konischer Formfläche, geneigt zur Axialrichtung der Hülse, auf dem Endbereich der Hülse ab, um einen ringförmigen Wulst am Endbereich zu schaffen, der sich radial nach außen erstreckt.

Weiterhin ist aus dem EP 0 524 844 B1 bekannt, den durch den Umrollverformschritt verformten Endbereich mit einem radial nach innen gerichteten Vorsprung zusätzlich zu versehen, indem die Hülse vollumfänglich gestaucht wird. Dabei wird die gesamte Hülse durch Stauchkräfte belastet, so daß eine Längenreduzierung kaum vorhersehbar ist und das Material der Hülse in ihrer gesamten Länge in Mitleidenschaft gezogen wird.

Aus der EP 1 386 677 A1 ist ein rotationsförmiges Werkzeug zum Umformen eines Endbereichs eines starren Hülse eines elastischen Gelenks bekannt. Das Formwerkzeug dient in einer besonderen Ausführung dazu, den Endbereich radial nach innen umzubiegen.

EP 1 219 853 A2 offenbart ebenfalls ein Formwerkzeug zum Umformen eines Endbereichs einer Hülse eines elastischen Gelenks. Das Formwerkzeug umfaßt eine Greifstruktur, welche die radiale Deformation des Endbereichs der Hülse in radialer Richtung nach außen beschränkt.

WO02/070170 schlägt ein Formwerkzeug zum Umformen des Endbereichs einer Hülse vor, bei dem an der Stirnfläche Zähne konzentrisch eingebracht sind, um radial verlaufende Nute in der Stirnfläche des Endbereichs der Hülse zu formen.

Es ist Aufgabe der Erfindung, ein kostengünstiges und einfaches, Verfahren zum Umformen eines Endbereichs einer starren Hülse eines elastischen Gelenks bereitzustellen, bei dem der Endbereich der Hülse zur Bildung von radial nach innen und/oder außen ragenden Überdikkungen oder Wülsten ohne Stauchung der gesamten Hülse so materialschonend wie möglich umgeformt werden soll, wobei schnelle Fertigungszyklen mit dem Verfahren möglich sein sollen.

Diese Aufgabe wird durch die Merkmale von Patentanspruch 1 gelöst. Danach wird ein Verfahren zum Umformen eines Endbereichs der starren Hülse mittels eines abrollenden Formkopfes vorgeschlagen, dessen Rotationsachse zur Axialrichtung der starren Hülse geneigt ist und von dem zumindest ein nicht vernachlässigbarer Teil der Umformkraft in den Endbereich mit zumindest einer radial nach innen weisenden Richtungskomponenten eingeleitet wird. Mit der erfindungsgemäßen Maßnahme ist ein Stauchen der Hülse zum Ausbilden eines radial nach innen, insbesondere über eine Nenndicke der Hülse hinausragenden Vorsprungs, beispielsweise als Verliersicherung für die Hülse, eines elastischen Gelenks nicht mehr notwendig. Die Hülse wird nur noch einer geringen axialen Verformungskraft ausgesetzt, wodurch die Hülse in Gesamtbetrachtung materialschonend bearbeitet werden kann. Außerdem gewährleistet die erfinderische Maßnahme, daß sowohl eine radiale Aufweitung als auch eine radiale Verengung des Endbereichs während eines einzigen Umformschritts realisierbar ist. Auf diese Weise kann ein ökonomisches und schnelles Fertigungsverfahren für Hülsen von elastischen Gelenken realisiert werden.

Mit der erfindungsgemäßen Maßnahme kann der Endbereich der Hülse verengt werden, um eine präzise Positionierung der Hülse um ein Klemmbauteil, wie eine Schraube, herum zu realisieren. Dabei ist der Durchmesser der Schraube zumindest ein wenig geringer als der Durchmesser der Hülse an deren verengt verformten Endabschnitt.

Insbesondere wird mit der Vergrößerung oder Verstärkung des Endbereichs der Hülse eine Erweiterung oder Vergrößerung der Montagefläche der Hülse, also des elastischen Gelenks, mit einem Teil des Kraftfahrzeugchassis erreicht, wodurch auf diese Weise der Montage-Kontaktdruck zwischen der Montagefläche und dem Kraftfahrzeug reduziert wird. Dies ermöglicht eine robuste Befestigung des elastischen Gelenks, insbesondere weil es damit möglich wird, wesentlich höhere Montagekräfte an der Montagefläche der Hülse angreifen zu lassen, ohne dem Risiko zu unterlaufen, daß zugeordnete Teile des Kraftfahrzeugchassis verformt werden.

Erfindungsgemäß wird die dem Formwerkzeug zuzuwendende Montagefläche des Endbereichs beim abrollenden Umformen durch das Formwerkzeug aufgespreizt oder aufgespaltet. Vorzugsweise kann eine vorbestimmbare, radial nach außen und/oder radial nach innen weisende Spreizrichtungskomponente hervorgerufen werden. Die Größe einer Spreizrichtungskomponenten kann abhängig von dem gewünschten Verformungsmaß eingestellt werden. Dabei kann für eine stärkere Verformung nach radial außen eine größere Spreizrichtungskomponente in radialer Richtung nach außen und bei einer stärkeren Einengung des Endbereichs der Hülse eine größere Spreizrichtungskomponente nach radial innen vorgesehen sein.

Erfindungsgemäß wird der nicht vernachlässigbare Teil der Umformkraft derart eingeleitet, daß sich der Endbereich zumindest teilweise nach radial innen verformt. Vorzugsweise ist die Umformkraft gleichzeitig auch radial nach außen in den Endbereich eingeleitet, so daß eine radiale Aufweitung des Endbereichs realisiert wird. Dabei soll sichergestellt werden, daß der Endbereich über dessen radiale Abmessung, nämlich die radiale Nenndicke der Hülse, im unverformten Zustand hinaus radial nach innen und/oder nach außen verformt wird.

Eine Weiterbildung der Erfindung betrifft das Bestimmen eines Verformungsverhältnisses während eines Umformschritts radial nach außen und radial nach innen. Vorzugsweise ist ein Verformungsverhältnis für gewünschte Verformungen des Endbereichs einstellbar. Durch die punktuelle oder linienartige Umformung und die Regelbarkeit der Umformkraft kann eine exakte Verformung der Hülse mit sehr genauen Abmessungen realisiert werden. Das Verfahren kann derart eingestellt werden, daß eine Verformung des Endbereichs radial nach außen unterbleibt und die gesamte Umformkraft derart in den Endbereich eingeleitet wird, daß sich letzterer ausschließlich radial nach innen verformt. Es können andere Verformungsverhältnisse eingestellt werden, bei denen die radial äußere Umformung gegenüber der radial inneren Umformung überwiegt, oder umgekehrt.

Bei einer besonderen Weiterbildung der Erfindung kann die Verfonnung des Endbereich radial nach innen sowie auch radial nach außen mittels einer Matrize eingeschränkt werden. Es hat sich allerdings herausgestellt, daß auch für besonders genau einzuhaltende Toleranzmaße des elastischen Gelenks eine Matrizenanordnung nicht erforderlich ist. Außen- und/oder Innenmatrizen können insbesondere dann eingesetzt werden, wenn bestimmte Außen- und/oder Innenformen des Endbereichs gewünscht sind.

Bei einer bevorzugten Weiterbildung der Erfindung wird die Verformung des Endbereichs radial nach außen zumindest begrenzt und vorzugsweise vollständig verhindert, so daß das erfindungsgemäße Verfahren ein Aufweiten des Endbereichs über dessen unverformten Zustand ausgeschlossen ist.

Des weiteren betrifft die Erfindung ein gemäß den Merkmalen von Patentanspruch 7 ausgebildetes Werkzeug zum Umformen eines Endbereichs einer starren Hülse. Danach ist das Werkzeug, das an dem Endbereich abrollend eine Umformkraft lokal begrenzt einleiten kann, mit einer Einrichtung zum gerichteten Einleiten der Umformkraft in den Endbereich mit zumindest einer nicht vernachlässigbaren, in zur Rotationsachse weisenden Richtungskomponenten versehen, wobei die Einrichtung als Aufspreiz- oder Aufspaltstruktur ausgeführt ist. Vorzugsweise ist die Einrichtung an der Formfläche angeordnet, die insbesondere im wesentlichen konisch oder im wesentlichen kegelstumpfförmig ausgeführt ist. Die konische Fläche bildet mit einer zur Axialrichtung des Formkopfes senkrechten Radialrichtung einen nicht vernachlässigbaren Winkel, der insbesondere einer Neigung der Rotationsachse gegenüber der Längsachse der Hülse beim Umformvorgang entspricht.

Bei einer Weiterbildung der Erfindung kann die Einrichtung dazu ausgelegt sein, die Umformkraft in den Endbereich sowohl mit einer nicht vernachlässigbaren, hin zu der Rotationsachse als auch von der Rotationsachse weg weisenden Richtungskomponente gerichtet einzuleiten. Auf diese Weise ist es möglich, mit ein und demselben Werkzeug eine Aufweitung und eine Verengung des Endbereichs der Hülse mittels eines einzigen Umformschritts zu realisieren.

Erfindungsgemäß ist die Einrichtung als Aufspreiz- oder Aufspaltstruktur ausgeführt. Dabei kann ein Spreizwinkel zum Einstellen der gewünschten Richtungskomponenten der Umformkraft wählbar sein. Überraschenderweise stellte sich bei dem Einsatz einer Aufspreiz- und Aufspaltstruktur heraus, daß der aufgespreizte oder aufgespaltete Endbereich der Hülse eine Aufweitung und Einengung der radialen Abmessung des Endbereichs bewirkt, ohne daß die Stabilität und Festigkeit der Hülse bei deren Abstützen an beispielsweise einem Kraftfahrzeug-Chassisteil beeinträchtigt ist. Insbesondere die am aufgespreizten oder aufgespalteten Endbereich auftretenden Kerbspannungen sind trotz hoher Montagekräfte nicht die die Lebensdauer der Hülse des elastischen Gelenks bestimmenden Größen. Vielmehr ist durch das Erzeugen eines radial innen liegenden und radial außen liegenden aufgespreizten Abstützarms eine verbesserte Elastizität des Gelenks dahingehend gegeben, daß die aufgespreizten Abstützarme je nach Abstützbelastung gemäß einer scharnierartigen

Bewegung gegenüber dem Hülsenkörper nachgeben können und damit Spitzenbelastungen insbesondere an dem an der Hülse angebrachten Elstomerkörper vermeiden.

Bei einer bevorzugten Ausführung der Erfindung sind die Einrichtung und der Formkörper aus einem Stück gefertigt.

Vorzugsweise ist die Einrichtung als ein sich von der Formfläche erstreckender keilförmiger Vorsprung ausgebildet, wobei die Keilform derart spitz zuläuft, daß ein Penetrieren der Einrichtung in den Endbereich der Hülse schon mit geringer Umformkraft möglich ist. Durch Wahl des Neigungswinkels der keilförmigen Einrichtung kann das Maß der gewünschten Aufweitung oder Verengung des Endbereichs eingestellt oder bestimmt werden.

Bei einer Weiterbildung der Erfindung erstreckt sich die Einrichtung zumindest teilweise konzentrisch um die Rotationsachse. Vorzugsweise ist die Einrichtung im wesentlichen kreisförmig an der Formfläche ausgebildet. Dabei kann durch Auswahl des Durchmessers der konzentrischen Einrichtung der Grad der Umformung radial nach innen und/oder radial nach außen eingestellt werden.

Bei einer bevorzugten Weiterbildung der Erfindung umfaßt die Einrichtung eine Umgreifstruktur, die dazu ausgelegt ist, die Außenseite des Endbereichs der Hülse zu umgreifen. Auf diese Weise kann die Umformkraft zu einem großen Teil auf einfache und das Material des Endbereichs der Hülse schonende Weise in eine radial nach innen weisende Richtung umgelenkt werden. Vorzugsweise ist die Umgreifstruktur mit einer Innenabmessung versehen, die im wesentlichen einer äußeren Abmessung eines Endbereichs der Hülse entspricht, vorzugsweise mit einem geringen Übermaß zur Außenabmessung des Endbereichs in dessen unverformten Zustand ausgebildet ist.

Bei einer Weiterbildung ist das erfindungsgemäße Werkzeug mit wenigstens einem Umformbegrenzer versehen, welcher die Umformung des Endbereichs radial nach innen und/oder radial nach außen begrenzen kann. Bei einer Weiterbildung der Erfindung ist der Umformbegrenzer durch ein konzentrisch um die Rotationsachse des Formkopfs liegendes, sich von der Formfläche erstreckendes vollförmiges Ansatzstück ausgebildet. Das Ansatzstück umfaßt eine leicht konische Außenform, die in die unverformte Innenhülse paßbar ist. Der Umformbegrenzer zum Begrenzen der Umformung in radialer Richtung nach außen kann vorzugsweise durch die Umgreifstruktur gebildet sein. Um eine radial nach außen gerichtete kleine Stufe am Endbereich der Hülse zu formen, kann die Umgreifstruktur ein entsprechendes Übermaß gegenüber dem unverfomten Hülsenendbereich aufweisen.

Desweiteren betrifft die Erfindung ein elastisches Gelenk gemäß Anspruch 18 mit einer Längsachse, das eine radial innen liegende und/oder eine radial außen liegende Hülse aufweist. Ein Elastomerkörper ist mit der radial innen liegenden und/oder der radial außen liegenden Hülse verbunden. Die Hülse weist einen Endbereich mit einer Abstützfläche auf, wobei der Endbereich mit einer radialen Überdicke ausgebildet ist. Erfindungsgemäß ist an der Abstützfläche wenigstens eine Einkerbung oder Furche derart eingebracht, daß der überdicke Endbereich im wesentlichen um das radiale Maß der Einkerbung über eine Nenndicke der Hülse hinaus radial aufgeweitet ist. Die Aufweitung durch die Einkerbung bewirkt eine größere radiale Abmessung des Endbereichs und damit einen größeren Abstützbereich für das elastische Gelenk. Materialbelastende Stauchverfahren zum kaltumformenden Vergrößern des Endbereichs können damit entbehrt werden. Die Einkerbung bewirkt ein Aufspalten des Endbereichs in einen radial innen liegenden und einen radial außen liegenden Abstützbereich, der durch die Einkerbung getrennt ist. Aufgrund dieser getrennten Abstützbereiche kann ein sicheres Abstützen der Hülse an unebenen Flächen, beispielsweise eines Kraftfahrzeug-Chassiteils, insofern ausgeglichen werden, als die durch die Einkerbung gebildeten Abstützschenkel unabhängig voneinander elastisch verformt werden können. Unter Nenndicke oder nominaler Dicke der Hülse sei die Dicke der Hülse verstanden, welche die Hülse im wesentlichen im unverformten Zustand, insbesondere im wesentlichen am dem dem Endbereich benachbarten, unverformten Körperabschnitt der Hülse aufweist. Vorzugsweise ist die Nenndikke der Hülse im Verlauf der gesamten Längsachse der Hülse außer dem ungeformten Endbereich konstant.

Insbesondere kann einer der Abstützschenkel, insbesondere der radial nach außen durch das Einbringen der Einkerbung gebildete Abstützschenkel, zum Abstützen an einem Kraftfahrzeugchassisteil genutzt werden, wobei die Stirn- oder Abstützfläche des Abstützschenkels mit dem Fahrzeugchassis kraftschlüssig verbunden werden kann. Der radial innen liegende durch die Einkerbung gebildete Abstützschenkel kann zur Anlage eines Klemmbauteils, wie einer Klemmschraube, genutzt werden, wodurch durch die Verengung der Hülse aufgrund des radial innen liegenden Abstützschenkels eine präzise Positionierung der Schraube ermöglicht ist. Dabei ist der Außendurchmesser der Schraube zumindest geringfügig kleiner auszubilden als der kleinste Durchmesser des radial innen liegenden Abstützschenkels. Die Ausbildung zweier Abstützschenkel verleiht dem elastischen Gelenk eine Flexibilität dahingehend, daß auch unebene Flächen an dem Chassisteil zur Montage genutzt werden können.

Bei einer bevorzugten Weiterbildung der Erfindung erstreckt sich insbesondere bei einem rotationsförmigen elastischen Gelenk die Einkerbung zumindest kreisabschnittsweise konzentrisch zur Längsachse der Hülse. Vorzugsweise erstreckt sich die Einkerbung an der Abstützfläche im wesentlichen entlang einer Kreislinie um die Längsachse der Hülse.

Bei einer bevorzugten Weiterbildung der Erfindung ist die Einkerbung im Querschnitt V-förmig. Auf diese Weise wird erreicht, daß die Überdicke des Endbereichs von dessen Abstützfläche entlang der Längsachse der Hülse allmählich abnimmt, bis der Endbereich in den Hülsenkörper mit Nenndicke übergeht. Vorzugsweise ist ein Öffnungswinkel der V-förmigen Einkerbung zwischen ca. 15° bis 120°, vorzugsweise zwischen ca. 30° und 90°.

Um den wulstartigen Endbereich auf unterschiedliche Weise radial nach innen und radial nach außen erstrecken zu lassen, kann die V-förmige Einkerbung unterschiedliche V-Schenkel-Winkel aufweisen, wobei ein kleiner V-Schenkel-Winkel eine kleine Aufweitung des Endbereichs in der entsprechenden Radialrichtung bewirkt. Entsprechend ist ein großer V-Schenkel-Winkel für eine starke Aufweitung des Endbereichs in der zugeordneten Radialrichtung verantwortlich.

Um die gewünschte Überdicke und eine radial aufgeweitete große Abstützfläche zu erreichen, ist die Einkerbung oder Furche je nach Dimensionierung der Hülse zwischen ca. 0,5 mm und 3 mm tief.

Sollte der Endbereich sich gleichmäßig nach radial innen und nach radial außen erstrecken, ist die Einkerbung im wesentlichen auf Höhe des Mediandurchmessers einer rotationsfönnigen Hülse anzuordenen. Über einen Versatz der Einkerbung zum Mediandurchmesser der rotationsförmigen Hülse kann eine gewünschte stärkere Aufweitung des Endbereichs in der entsprechenden Radialrichtung vorgenommen werden.

Das elastische Gelenk weist eine Längsachse, eine radial innen liegende oder eine radial außen liegende Hülse auf. Ein Elastomerkörper ist an wenigstens einer der Hülsen anvulkanisiert. Diese Hülse hat einen Endbereich, der eine radial nach innen ragende Überdikkung aufweist, an der eine große Abstützfläche gebildet ist. Vorzugsweise ist die Außenseite des gegenüber einer Nenndicke der Hülse überdicken Endbereichs, eines Übergangsbereichs von dem Endbereich zum Hülsenkörper und zumindest eines dem Übergangsbereich benachbarten Abschnitts des Hülsenkörpers im wesentlichen in einer zur Längsachse konzentrischen Ebene liegend geformt. Ein derartig elastisches Gelenk zeichnet sich durch eine einfache Montierbarkeit auf, als radiale Vorsprünge nach außen das Einbringen des Hülsenkörpers in Aufnahmen nicht behindert. Bei einer radial innen liegenden Hülse, bei der der überdicke Endbereich eine Verliersicherung des elastischen Gelenks darstellen kann, gewährleistet der Endbereich ohne radial nach außen vorstehende Überdickung, daß der außenliegende Elastomerkörper nicht durch Quetschung in dessen Dämpfungsfunktion beeinflußt ist.

Bei einer bevorzugten Ausführung der Erfindung ist die gesamte Außenseite der Hülse im wesentlichen eben und stufenfrei.

Weitere Vorteile, Merkmale und Eigenschaften der Erfindung werden durch die folgende Beschreibung bevorzugter Ausführungen anhand der beiliegenden Zeichnungen deutlich, in denen zeigen:
- Figur 1: eine Querschnittsansicht zweier Werkzeug-Hülsen-Anordnungen zur Durchführung des erfindungsgemäßen Verfahrens zum Umformen eines Endbereichs einer Hülse, wobei eine erste Ausführung mit der zeichnerisch linken Hälfte der Anordnung und eine zweite Ausführung mit der zeichnerisch rechten Hälfte der Anordnung dargestellt sein sollen.
- Figur 2: eine Querschnittsansicht eines Endbereichs einer gemäß der Ausführung des Verfahrens mit der linken Anordnung nach Figur 1 umgeformten Hülse;
- Figur 3: eine Querschnittsansicht einer Werkzeug-Hülsen-Anordnung gemäß einem nicht erfindungsgemäßen Umformverfahren;
- Figur 4: eine Draufsicht auf eine Formseite eines erfindungsgemäßen Formwerkzeugs in einer ersten Ausführung;
- Figur 5: eine Draufsicht auf eine Formseite eines nicht erfindungsgemäßen Formwerkzeugs.

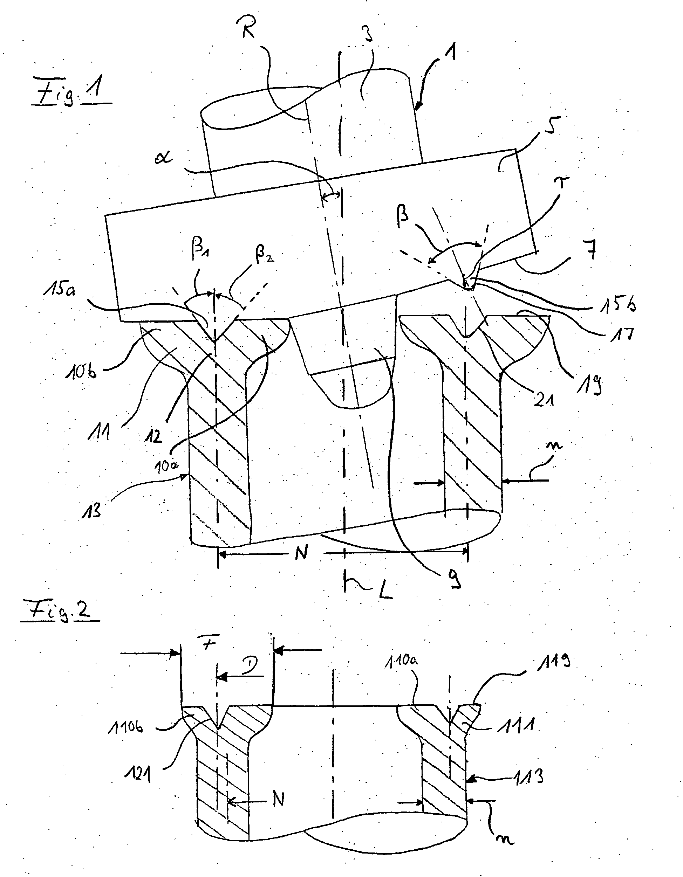

In Figur 1 ist das erfindungsgemäße Verfahren in einer Ausführung angedeutet, wobei zwei verschiedene Werkzeug-Hülsen-Anordnungen dargestellt sind. Im Grundsatz ist beim erfindungsgemäßen Verfahren ein einteiliger Formkopf 1 mit einer Antriebswelle 3, einem Formkörper 5 und einer Formfläche 7 dargestellt ist. An der Formfläche 7 erstreckt sich ein konisches Ansatzstück 9, das an seinem Ende abgerundet ist.

Über die Formfläche 7 wird eine Umformkraft lokal begrenzt an einem linienartigen Kontaktbereich (nicht sichtbar) in einen Endbereich 11 einer Innenhülse 13 eines nicht näher dargestellten elastischen Gelenks eingeleitet. Die Hülse 13 umfaßt einen Hülsenkörper 14 mit einer Nenndicke n.

Die Formfläche 7 ist konisch zur Rotationsachse R des Formwerkzeugs 1 ausgebildet. Die Rotationsachse R ist zur Längsachse L der Hülse 13 in einem Winkel α geneigt. Bei dem Umformvorgang führt der Formkopf 1 eine Drehbewegung zum einem um seine eigene Rotationsachse R und zum anderen um die Längsachse L der Hülse 13, wobei die Rotationsachse R eine konische Bewegungsbahn bezüglich der Längsachse L beschreibt. Die Bewegungsabläufe des Formkopfs 1 werden detailliert in dem europäischen Patent EP 0 524 844 B1 beschrieben. Für den Umformschritt des Endbereichs 11 der Hülse 13 ist allerdings insbesondere aufgrund der Regelbarkeit der Andrückkraft des Formkopfes 1 gegen die Hülse 13 eine Außenmatrize zum Begrenzen der radialen Verformung des Endbereichs 11 nach außen nicht notwendig. Sollte eine bestimmte Außenform des Endbereichs 11 gewünscht sein, kann durchaus eine Außenmatrize vorgesehen sein.

Der Formkopf 1 umfaßt an der Formfläche 7 einen sich konzentrisch um die Rotationsachse R erstreckenden keilförmigen Vorsprung 15, der auf Höhe eines Durchmessers um die Rotationsachse R angeordnet ist, mit dem beim Abrollen an der Fläche 19 der Hülse 13 im wesentlichen der Mittel- oder Mediandurchmesser N der Hülse 13 zusammenfällt. Der V-Vorsprung 15 hat einen Öffnungswinkel β, der ca. 60° beträgt. Bei der Ausführung des Formkopfes gemäß Figur 1 sind die V-Schenkel-Winkel β₁ und β₂ zu einer Normalen T der Formfläche 7 im wesentlichen gleich groß.

Bei der ersten Ausführung des Formkopfes, welche auf der linken Hälfte der Figur 1 dargestellt ist, ist der keilförmige Vorsprung 15a mit einem spitz zulaufenden Ende ausgebildet, um das Penetrieren des Vorsprungs in die Hülse 13 zu erleichtern. Bei der zweiten, auf der rechten Hälfte der Fig. 1 dargestellten Ausführung des Formkopfes 1 ist der keilförmige Vorsprung 15b zu dessen freien Ende hin abgerundet, wobei die runde Spitze 17 mit einem festgelegten Radius r versehen sein kann. Für verschiedene Formköpfe können unterschiedliche Radien je nach gewünschter Form des zu verformenden Endbereichs der Hülse ausgewählt werden.

Ein derart geformter und positionierter Vorsprung 15 bewirkt bei dessen Ansetzen und abrollenden Eindrücken in die Abstützfläche 19 des Endbereichs 11 ein gleichmäßiges radiales Aufweiten des Endbereichs 11 nach innen sowie nach außen. Durch das Eindrücken des Vorsprungs 15 wird das Hülsenmaterial an der Abstützfläche 19 plastisch verformt, so daß eine den gesamten Endbereich beeinflussende Einkerbung 21 an der Abstützfläche 19 eingebracht ist. Durch die Einkerbung 21 wird der Endbereich in zwei sich von einer gemeinsamen Basis 12 radial voneinander weg erstreckende Abstützarme 10a und 10b aufgespalten. Der in Figur 1 dargestellte aufgeweitete Endbereich 11 weist eine zur deutlichen Darstellung etwas zu groß gezeichnete Aufweitung oder Überdickung auf. Es soll klar sein, daß sich das Maß der Auf weitung des Endbereichs 11 im wesentlichen aufgrund des durch den Vorsprung 15 beim Eindrücken in den Endbereich 11 verdrängten Volumens plus der durch die Formkraft erzeugten lokalen Stauchung oder Quetschung des Hülsenmaterials an der Formfläche 7 ergibt.

Die zweite Ausführung des Formkopfes mit einem keilförmigen Vorsprung 15b mit abgerundeter Spitze 17 ruft Einkerbungen an dem Endbereich 11 der Hülse 13 hervor, bei denen Spannungsspitzen an der Einkerbungssenke vermieden werden, weil keine kantenförmigen Einkerbungen an der Einkerbung hervorgerufen werden. Außerdem verhindert das Abrunden des keilförmigen Vorsprungs 15b, daß der keilförmige Vorsprung 15b zu tief in das Material der Hülse 13 eindringen kann, so daß die Verformung des Endbereichs 11 in Radialrichtung konzentriert und in Axialrichtung möglichst eingeschränkt ist.

Das Ansatzstück 9 bildet einen Anschlag oder Umformbegrenzer dahingehend, daß eine radiale Aufweitung nach innen auf die radiale Abmessung des Fußes des Ansatzes 9 an der Formfläche 7 begrenzt ist.

Das in Figur 1 gezeigte besondere Bouterollage-Verfahren ermöglicht mit einem einzigen Umformschritt ein Vergrößern der Abstützfläche 19 am Endbereich 11 in entgegengesetzte radiale Richtungen, nach außen sowie nach innen.

Figur 2 zeigt einen Hülsenkörperabschnitt mit Endbereich 111, der gemäß dem Umfonnverfahren mittels der linken Formkopf-Hülsen-Anordnung nach Figur 1 gefertigt ist. Da zur besseren Lesbarkeit der Figurenbeschreibung für identische und ähnliche Bauteile der Hülse 113 identische Bezugszeichen verwendet werden, die um 100 erhöht sind, bedarf es insbesondere keine erneute Beschreibung für diese Bauteile und deren Funktion.

Der Endbereich 111 unterscheidet sich von dem in Figur 1 gezeigten Endbereich 11 der Hülse 13 gemäß Figur 1 darin, daß er stärker nach radial innen als nach radial außen aufgeweitet ist, also der radial außen liegende Abstützarm 110b weniger prägnant ausgebildet ist als der radial innen liegende Abstützarm 110a. Dies wird dadurch erreicht, daß die Einkerbung 121 an der Abstützfläche 119 mit einem größeren Durchmesser D als der Mediandurchmesser N der Hülse 113 eingebracht wurde. Da sich die Abmessung der Einkerbung 121 von der der 21 nicht unterscheidet, ist die radiale Ausdehnung F der Abstützfläche 119 der ungeformten Endbereiche 11, 111 im wesentlichen gleich groß.

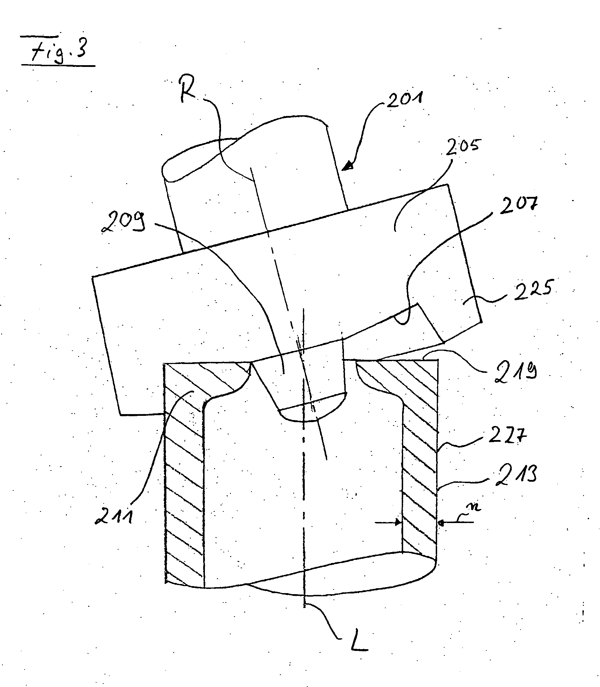

Figur 3 wird zum besseren Verständnis der Erfindung beschrieben. Da zur besseren Lesbarkeit der Figurenbeschreibung für identische und ähnliche Bauteile der Formkkopf-Hülsen-Anordnung identische Bezugszeichen verwendet werden, die um 200 erhöht sind, bedarf es insbesondere für diese Bauteile und deren Funktion keiner erneuten Erläuterung.

Der Formkopf 201 umfaßt radial außen liegend an seiner Formfläche 207 eine einstückig mit dem Formkörper 205 ausgebildete, sich im wesentlichen axial erstreckende Umgreifstruktur 225. Die Innenabmessung der Umgreifstruktur 225 entspricht im wesentlichen der Außenabmessung der Hülse 213 im unverformten Zustand. Beim abrollenden Umformvorgang bewirkt die Umgreifstruktur 225, daß sich der Endbereich 211 der Hülse 213 nicht in radialer Richtung nach außen verformen kann, sondern leitet die Umformkraft ausschließlich in nach innen gerichtete radiale Kraftkomponenten um. Auf diese Weise wird ein im wesentlichen L-förmiger Endbereich 211 erzeugt, der eine radial nach innen weisende Einengung aufweist, mit der eine große Abstützfläche 219 und eine Verliersicherung erzeugt ist. Das Ansatzstück 209 des Fromkopfes 201 verhindert ein Verformen des Endbereichs über ein gewünschtes Maß nach radial innen. Somit wird eine Hülse 213 mit einem radial nach innen ragenden Kragen gebildet, wobei die Außenseite 227 der Hülse 213 sich in Längsrichtung kontinuierlich in einer zylindrischen Ebene liegend erstreckt.

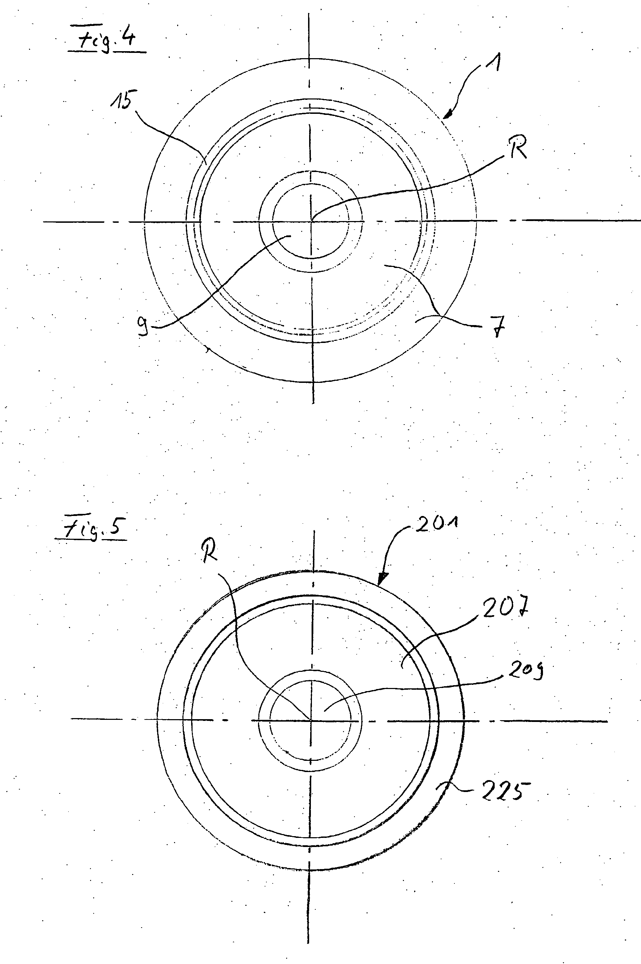

Gemäß Figur 4 ist in einer Draufsicht die Formfläche 7 des Formkopfes 1 dargestellt, der bei dem Umformverfahren nach Figur 1 verwendet wird. Aus Figur 4 ist die rotationsförmige Ausgestaltung des Formkopfes 1 zur Rotationsachse R ersichtlich, wobei sich das Ansatzstück 9 sowie der keilförmige Vorsprung 15 konzentrisch um die Rotationsachse R erstrekken.

Gemäß Figur 5 ist in einer Draufsicht die Formfläche 207 des Formkopfes 201 dargestellt, der gemäß dem nicht erfindungsgemäßen Umformverfahren nach Figur 3 verwendet wird. Aus Figur 5 ist die rotationsförmige Ausgestaltung des Formkopfes 201 ersichtlich, wobei der Ansatz 209 sowie die Umgreifstruktur 225 konzentrisch um die Rotationsachse R ausgebildet sind.

Die Gestaltung der Formfläche 7, wie in der Figur 4 dargestellt ist, verdeutlicht das Funktionsprinzip des erfindungsgemäßen Umformverfahrens dahingehend, daß die im wesentlichen ebene Formfläche 7 mit dem keilförmigen Vorsprung 15 derart zusammenwirkt, daß zum einen der Hülsenkörper konzentriert an einer lokal begrenzten Stelle umgeformt wird, allerdings verteilt entlang einer Krafteinleitlinie radial längs der Umformfläche 7, und zum anderen der keilförmige Vorsprung 15 die einzuleitende Umformkraft in die gewünschte Richtung leite in welche sich das Hülsenmaterial zur Bildung des gewünschten Endbereichs verformen soll.

Die in der vorstehenden Beschreibung, den Figuren und den Ansprüchen offenbarten Merkmale können sowohl einzeln als auch in beliebiger Kombination für die Realisierung de Erfindung in den verschiedenen Ausgestaltungen von Bedeutung sein.

### Bezugszeichenliste

- 1,201: Formkopf
- 3: Antriebswelle
- 5, 205: Formkörper
- 7,207: Formfläche
- 9, 209: Ansatzstück oder Ansatz
- 10a, 10b, 110a, 110b: Abstützarm
- 11, 111, 211: Endbereich
- 12: Basis
- 13, 113, 213: Hülse
- 14: Hülsenkörper
- 15, 15a, 15b: keilförmiger Vorsprung
- 17: gerundete Spitze
- 19, 119, 219: Abstützfläche
- 21, 121: Kerbe oder Einkerbung
- 225: Umgreifstruktur
- 227: Außenseite der Hülse
- α: Winkel
- β: Öffnungswinkel
- β₁, β₂: V-Schenkel-Winkel
- D: Durchmesser
- L: Längsachse
- N: Mediandurchmesser
- R: Rotationsachse
- T: Normale
- n: Nenndicke
- r: Radius

## Patentansprüche

1. Verfahren zum Umformen eines Endbereichs (11, 111) einer starren Hülse (13, 113) eines elastischen Gelenks, wobei ein Formwerkzeug zum Aufbringen einer Umformkraft an dem Endbereich (11, 111) angesetzt und um eine gegenüber einer Axialrichtung der Hülse geneigte Rotationsachse (R) auf dem Endbereich (11, 111) abrollend gedreht wird derart, daß der Endbereich (11, 111) in Radialrichtung der Hülse (13, 113) verformt wird, wobei zumindest ein nicht vernachlässigbarer Teil der Umformkraft in den Endbereich (11, 111) mit zumindest einer radial nach innen weisenden Richtungskomponente eingeleitet wird, **dadurch gekennzeichnet, daß** an einer dem Formwerkzeug zuzuwendenden Fläche der Endbereich (11, 111) beim abrollenden Umformen durch das Formwerkzeug aufgespreizt oder aufgespalten wird.

2. Verfahren nach Anspruch 1, **dadurch gekennzeichnet, daß** ein Verhältnis von radial äußerer und radial innerer Formung eingestellt wird.

3. Verfahren nach einem der vorangegangenen Ansprüche, **dadurch gekennzeichnet, daß** der Umformschritt frei von einer eine Verformung des Endbereichs (11, 111, 211) nach radial innen und/oder außen einschränkenden Matrize durchgeführt wird.

4. Verfahren nach einem der vorangegangenen Ansprüche, **dadurch gekennzeichnet, daß** eine Verformung des Endbereichs (11, 111) radial nach außen zumindest begrenzt und vorzugsweise vollständig verhindert wird.

5. Verfahren nach Anspruch 1, **dadurch gekennzeichnet, daß** eine vorbestimmbare, radial nach außen und/oder radial nach innen weisende Spreizrichtungskomponente hervorgerufen wird.

6. Verfahren nach Anspruch 1 oder 5, **dadurch gekennzeichnet, daß** die Größe einer Spreizrichtungskomponente abhängig von dem gewünschten Verformungsmaß eingestellt wird.

7. Rotationsförmiges Werkzeug zum Umformen eines Endbereichs (11, 111) einer starren Hülse (13, 113) eines elastischen Gelenks, umfassend einen Formkörper mit einer Formfläche (7) über die dem Endbereich (11, 111) abrollend eine Umformkraft mitteilbar ist, und eine Einrichtung zum gerichteten Einleiten der Umformkraft in den Endbereich (11, 111) mit zumindest einer nicht vernachlässigbaren, radial nach innen bezüglich der Rotationsachse (R) des Werkzeugs weisenden Richtungskomponente, **dadurch gekennzeichnet, daß** die Einrichtung als Aufspreiz- oder Aufspaltstruktur ausgeführt ist.

8. Werkzeug nach Anspruch 7, **dadurch gekennzeichnet, daß** die Einrichtung an der Formfläche (7) angeordnet ist.

9. Werkzeug nach Anspruch 7, **dadurch gekennzeichnet, daß** ein Spreizwinkel zum Einstellen der Richtungskomponente der Umformkraft wählbar ist.

10. Werkzeug nach einem der Ansprüche 7 bis 9, **dadurch gekennzeichnet, daß** Einrichtung und der Formkörper aus einem Stück gefertigt sind.

11. Werkzeug nach einem der Ansprüche 7 bis 10, **dadurch gekennzeichnet, daß** die Einrichtung als ein sich von der Formfläche erstreckender keilförmiger oder V-förmiger Vorsprung (15, 15a, 15b) ausgebildet ist, wobei insbesondere die Spitze des Vorsprungs (15b) gerundet ist.

12. Werkzeug nach einem der Ansprüche 7 bis 11, **dadurch gekennzeichnet, daß** sich die Einrichtung konzentrisch um die Rotationsachse erstreckt.

13. Werkzeug nach Anspruch 12, **dadurch gekennzeichnet, daß** der Durchmesser der konzentrischen Einrichtung zum Einstellen der Richtungskomponente der Umformkraft auswählbar ist.

14. Werkzeug nach einem der Ansprüche 7 bis 13, **dadurch gekennzeichnet, daß** die Einrichtung für bestimmte Umformkraft-Einleitrichtungen hin zur Rotationsachse oder von dieser weg einstellbar ist.

15. Werkzeug nach einem der Ansprüche 10 bis 14, **dadurch gekennzeichnet, daß** die Einrichtung eine Umgreifstruktur aufweist, die dazu ausgelegt ist, die Außenseite des Endbereichs der Hülse zu umgreifen.

16. Werkzeug nach einem der Ansprüche 7 bis 15, **gekennzeichnet durch** einen Umformbegrenzer, der eine Umformung des Endbereichs (11, 111) der Hülse (13, 113) radial nach innen begrenzt.

17. Werkzeug nach Anspruch 16, **dadurch gekennzeichnet, daß** der Umformbegrenzer durch einen konzentrisch um die Rotationsachse (R) sich von der Formfläche erstreckenden Ansatz ausgebildet ist.

18. Elastisches Gelenk mit einer Längsachse, einer radial innenliegenden oder einer radial außenliegenden Hülse (13, 113) und einem zumindest mit der Hülse (13, 113) verbundenen Elastomerkörper, wobei die Hülse mindestens einen Endbereich (11, 111) mit einer Abstützfläche (19) aufweist, der mit einer radialen Überdicke ausgebildet ist, **dadurch gekennzeichnet, daß** zur Bildung der überdicke der Hülse (13, 113) im Bereich der Abstützfläche (19) der Endbereich (11, 111) durch eine in die Abstützfläche eingebrachte Einkerbung (21, 121) derart verformt ist, daß zumindest einer der der Einkerbung (21, 121) benachbarten Flankenabschnitte radial über eine Nenndickenabmessung der Hülse verlagert ist.

19. Elastisches Gelenk nach Anspruch 18, **dadurch gekennzeichnet, daß** an der Abstützfläche wenigstens eine Einkerbung (21, 121) derart eingebracht ist, daß der überdicke Endbereich im wesentlichen gemäß dem radialen Maß der Einkerbung (21, 121) über die Nenndickenabmessung der Hülse (13, 113) hinaus radial geweitet ist.

20. Elastisches Gelenk nach Anspruch 18 oder 19, **dadurch gekennzeichnet, daß** sich die Einkerbung (21, 121) zumindest kreisabschnittsweise im wesentlichen konzentrisch, insbesondere im wesentlichen kreisförmig, um die Längsachse erstreckt.

21. Elastisches Gelenk nach einem der Ansprüche 18 bis 20, **dadurch gekennzeich-net, daß** die Einkerbung V-förmig ist, wobei insbesondere die Senke der Einkerbung gerundet ist.

22. Elastisches Gelenk nach Anspruch 21, **dadurch gekennzeichnet, daß** ein Öffnungswinkel der V-förmigen Einkerbung zwischen ca. 15° bis ca. 120°, vorzugsweise 30° bis 90°, liegt.

23. Elastisches Gelenk nach einem der Ansprüche 18 bis 22, **dadurch gekennzeichnet, daß** die Einkerbung (21, 121) einen ersten V-Schenkel-Winkel und einen zweiten V-Schenkel-Winkel aufweist, die vorzugsweise unterschiedlich oder gleich groß sind.

24. Elastisches Gelenk nach einem der Ansprüche. 18 bis 23, **dadurch gekennzeichnet, daß** die Tiefe der Einkerbung (21, 121) zwischen ca. 0,5 mm und 3 mm liegt.

25. Elastisches Gelenk nach einem der Ansprüche, 18 bis 24; **dadurch gekennzeichnet, daß** die Einkerbung (21, 121) im wesentlichen auf Höhe eines Mediandurchmessers (N) der Hülse (13, 113) angeordnet ist.

26. Elastisches Gelenk nach einem der Ansprüche 18 bis 24, **dadurch gekennzeichnet, daß** die Einkerbung (21, 121) von einem Mediandurchmesser (N) der Hülse (13, 113) versetzt angeordnet ist.

27. Elastisches Gelenk nach einem der Ansprüche 18 bis 26, **dadurch gekennzeichnet, daß** die Hülse zwei Endbereiche und einen die Endbereiche einstückig verbindenden Hülsenkörper aufweist und mindestens einer der Endbereiche mit einer im wesentlichen radial nach innen ragenden Überdickung ausgebildet ist, wobei die Außenseite des überdicken Endbereichs, eines Übergangsbereichs von dem Endbereich zum Hülsenkörper und zumindest eines dem Übergangsbereich benachbarten Abschnitts des Hülsenkörpers (14) im wesentlichen in einer zur Längsachse konzentrischen Ebene liegt.

28. Elastisches Gelenk nach Anspruch 27, **dadurch gekennzeichnet, daß** die gesamte Außenseite der Hülse im wesentlichen eben und stufenfrei ist.

## Claims

1. Method for shaping an end area (11, 111) of a rigid sleeve (13, 113) of an elastic joint, with a shaping tool being applied in order to apply a shaping force to the end area (11, 111), and being rotated, in a rolling manner on the end area (11, 111) about a rotation axis (R) which is inclined with respect to an axial direction of the sleeve, such that the end area (11, 111) is deformed in the radial direction of the sleeve (13, 113), with at least a portion of the shaping force which is not negligible being introduced into the end area (11, 111) with at least one direction component pointing radially inwards, **characterized in that** the end area (11, 111) is spread or split during the rolling shaping process by the shaping tool on a surface facing the shaping tool.

2. Method according to Claim 1, **characterized in that** a ratio is set for the radially outer and radially inner shaping.

3. Method according to one of the preceding claims, **characterized in that** the shaping step is carried out free from a mould which restricts deformation of the end area (11, 111, 211) radially inwards and/or outwards.

4. Method according to one of the preceding claims, **characterized in that** deformation of the end area (11, 111) radially outwards is at least limited or is preferably completely prevented.

5. Method according to Claim 1, **characterized in that** a predeterminable spreading-direction component is caused, which points radially outwards and/or radially inwards.

6. Method according to Claim 1 or 5, **characterized in that** the magnitude of the spreading-direction component is set as a function of the desired extent of deformation.

7. Rotation-shaping tool for shaping an end area (11, 111) of a rigid sleeve (13, 113) of an elastic joint, comprising a moulding with a shaping surface (7) by means of which, rolling on the end area (11, 111), a shaping force can be signalled, and a device for directional introduction of the shaping force into the end area (11, 111) with at least one direction component which is not negligible and points radially inwards with respect to the rotation axis (R) of the tool, **characterized in that** the device is in the form of a spreading or splitting structure.

8. Tool according to Claim 7, **characterized in that** the device is arranged on the shaping surface (7).

9. Tool according to Claim 7, **characterized in that** a spreading angle can be chosen for setting the direction component of the shaping force.

10. Tool according to one of Claims 7 to 9, **characterized in that** the device and the moulding are manufactured integrally.

11. Tool according to one of Claims 7 to 10, **characterized in that** the device is in the form of a wedge-shaped or V-shaped projection (15, 15a, 15b) which extends from the shaping surface, in particular with the tip of the projection (15b) being rounded.

12. Tool according to one of Claims 7 to 11, **characterized in that** the device extends concentrically around the rotation axis.

13. Tool according to Claim 12, **characterized in that** the diameter of the concentric device can be selected in order to set the direction component of the shaping force.

14. Tool according to one of Claims 7 to 13, **characterized in that** the device can be adjusted towards the rotation axis or away from it for specific shaping-force introduction directions.

15. Tool according to one of Claims 10 to 14, **characterized in that** the device has a clasping structure which is designed to clasp the outside of the end area of the sleeve.

16. Tool according to one of Claims 7 to 15, **characterized by** a shaping limiter, which limits the shaping of the end area (11, 111) of the sleeve (13, 113) radially inwards.

17. Tool according to Claim 16, **characterized in that** the shaping limiter is formed by an attachment which extends concentrically around the rotation axis (R) from the shaping surface.

18. Elastic joint having a longitudinal axis, having a radially inner or a radially outer sleeve (13, 113) and having at least one elastomer body which is connected to the sleeve (13, 113), with the sleeve having at least one end area (11, 111) with a supporting surface (19) which is formed with a radial increased thickness, **characterized in that**, in order to form the increased thickness of the sleeve (13, 113) in the area of the supporting surface (19), the end area (11, 111) is deformed by means of a notch (21, 121), which is introduced into the supporting surface, such that at least one of the flank sections which is adjacent to the notch (21, 121) is moved radially over a nominal thickness dimension of the sleeve.

19. Elastic joint according to Claim 18, **characterized in that** at least one notch (21, 121) is introduced on the supporting surface such that the end area with the increased thickness is widened radially beyond the nominal thickness dimension of the sleeve (13, 113), essentially according to the radial size of the notch (21, 121).

20. Elastic joint according to Claim 18 or 19, **characterized in that** the notch (21, 121) extends around the longitudinal axis at least in circular sections essentially concentrically, in particular essentially in an annular shape.

21. Elastic joint according to one of Claims 18 to 20, **characterized in that** the notch is V-shaped, in particular with the base of the notch being rounded.

22. Elastic joint according to Claim 21, **characterized in that** the V-shaped notch has an opening angle between about 15° and about 120°, preferably 30° and 90°.

23. Elastic joint according to one of Claims 18 to 22, **characterized in that** the notch (21, 121) has a first V-limb angle and a second V-limb angle, which are preferably different or of the same size.

24. Elastic joint according to one of Claims 18 to 23, **characterized in that** the depth of the notch (21, 121) is between about 0.5 mm and 3 mm.

25. Elastic joint according to one of Claims 18 to 24, **characterized in that** the notch (21, 121) is arranged essentially at the level of a median diameter (N) of the sleeve (13, 113).

26. Elastic joint according to one of Claims 18 to 24, **characterized in that** the notch (21, 121) is arranged offset from a median diameter (N) of the sleeve (13, 113).

27. Elastic joint according to one of Claims 18 to 26, **characterized in that** the sleeve has two end areas and a sleeve body which integrally connects the end areas, and at least one of the end areas has an increased thickness which projects essentially radially inwards, with the outside of the end area with an increased thickness of a transitional area from the end area to the sleeve body and of at least one section of the sleeve body (14) adjacent to the transitional area lying essentially on a plane which is concentric with respect to the longitudinal axis.

28. Elastic joint according to Claim 27, **characterized in that** the entire outside of the sleeve is essentially flat, without any steps.

## Revendications

1. Procédé de formage d'une région d'extrémité (11, 111) d'un manchon rigide (13, 113, 213) d'une articulation élastique, où un appareil de formage permettant d'exercer une force de déformation est appliqué sur la région d'extrémité (11, 111) et mis en rotation autour d'un axe de rotation (R) incliné par rapport à la direction axiale du manchon, de manière à ce que la région d'extrémité (11, 111) soit déformée dans la direction radiale du manchon (13, 113), au moins une partie non négligeable de la force de déformation dans la région d'extrémité (11, 111) comportant au moins une composante directionnelle dirigée radialement vers l'intérieur,
**caractérisé en ce qu'**à une surface faisant face à l'outil de formage la région d'extrémité (11, 111) est fendue ou écartée par la rotation déformante de l'outil de formage.

2. Procédé selon la revendication 1, **caractérisé en ce que** le rapport de la déformation radiale vers l'extérieur et de la déformation radiale vers l'intérieur est fixé.

3. Procédé selon l'une des revendications précédentes, **caractérisé en ce que** l'opération de formage est exécutée sans matrice limitant la déformation de la région d'extrémité (11, 111, 211) radialement vers l'intérieur et / ou vers l'extérieur.

4. Procédé selon l'une des revendications précédentes, **caractérisé en ce que** la déformation de la région d'extrémité (11, 111) radialement vers l'extérieur est au moins limitée et, de préférence, complètement empêchée.

5. Procédé selon la revendication 1, **caractérisé en ce que** l'on produit une composante directionnelle assurant un écartement prédéterminé, orienté radialement vers l'extérieur et / ou vers l'intérieur.

6. Procédé selon la revendication 1 ou la revendication 5, **caractérisé en ce que** la composante directionnelle assurant un écartement est ajustée en fonction du degré de déformation souhaité.

7. Outil rotatif de formage d'une région d'extrémité (11, 111) d'un manchon (13, 113) rigide d'une articulation élastique, comprenant un corps de formage avec une surface de formage (7), pour appliquer par rotation une force de formage à la région d'extrémité (11, 111), et un dispositif permettant une application d'une force de formage orientée dans la région d'extrémité (11, 111) avec une composante, qui au moins n'est pas négligeable, orientée radialement vers l'intérieur par rapport à l'axe de rotation (R), **caractérisé en ce que** le dispositif est utilisé en tant que structure servant à écarter ou à fendre.

8. Outil selon la revendication 7, **caractérisé en ce que** le dispositif est prévu sur la surface de formage (7).

9. Outil selon la revendication 7, **caractérisé en ce que** l'angle d'écartement pour fixer les composantes directionnelles de la force de déformation est sélectionnable.

10. Outil selon l'une des revendications 7 à 9, **caractérisé en ce que** le dispositif et le corps de formage sont réalisés d'une pièce.

11. Outil selon l'une des revendications 7 à 10, **caractérisé en ce que** le dispositif est réalisé en saillie sous la forme d'un coin ou d'un "V" s'étendant depuis la surface de formage, la pointe de la saillie (15, 15a, 15b), en particulier, étant arrondie.

12. Outil selon l'une des revendications 7 à 11, **caractérisé en ce que** le dispositif est concentrique avec l'axe de rotation.

13. Outil selon la revendication 12, **caractérisé en ce que** le diamètre du dispositif concentrique fournissant des composantes directionnelles de la force de déformation est sélectionnable.

14. Outil selon l'une des revendications 7 à 13, **caractérisé en ce que** le dispositif permettant l'application d'une force de déformation directionnelle déterminée peut être agencé suivant l'axe de rotation ou suivant une direction déviée par rapport à l'axe de rotation.

15. Outil selon l'une des revendications 10 à 14, **caractérisé en ce que** le dispositif comprenant une structure enveloppante qui est agencée de manière à envelopper le côté externe de la région d'extrémité du manchon.

16. Outil selon l'une des revendications 7 à 15, **caractérisé par** un limiteur de déformation, qui limite la déformation de la région d'extrémité (11, 111) du manchon (13, 113) radialement vers l'intérieur.

17. Outil selon la revendication 16, **caractérisé en ce que** le limiteur de déformation est réalisé par un corps saillant agencé sur la surface de formage de manière à être concentrique avec l'axe de rotation (R).

18. Articulation élastique avec un axe longitudinal, un manchon disposé radialement à l'intérieur ou radialement à l'extérieur (13, 113) et un corps en un élastomère fixé au moins à un manchon (13, 113), où le manchon comporte au moins une région d'extrémité (11, 111) avec une surface de support (19), qui est réalisée avec un épaississement radial, **caractérisée en ce que** pour la formation du épaississement radial du manchon (13, 113) dans la région de la surface de support (19) la région d'extrémité (11, 111) est déformée en réalisant une entaille (21, 121) dans la surface de support de manière à ce qu'au moins une des sections de flanc jouxtant radialement l'entaille (21, 121) soit déplacée radialement au-delà de la dimension nominale du manchon.

19. Articulation élastique selon la revendication 18, **caractérisée en ce que** la surface de support comporte au moins une entaille (21, 121) réalisée de manière à ce que la région d'extrémité présentant un épaississement soit élargie au-delà de la l'épaisseur nominale du manchon (13, 113) sensiblement de la largeur radiale de l'entaille (21, 121).

20. Articulation élastique selon la revendication 18 ou la revendication 19, **caractérisée en ce que** l'entaille (21, 121) a une forme d'au moins un segment de cercle ou sensiblement la forme d'un cercle, sensiblement concentrique avec l'axe longitudinal.

21. Articulation élastique selon l'une des revendications 18 à 20, **caractérisée en ce que** l'entaille a la forme d'un "V", l'abaissement de l'entaille, en particulier, étant arrondi.

22. Articulation élastique selon la revendication 21, **caractérisée en ce que** l'angle d'ouverture de l'entaille en forme de "V" est d'environ 15 ° à environ 120 ° et, de préférence de 30 ° à 90 °.

23. Articulation élastique selon l'une des revendications 18 à 22, **caractérisée en ce que** l'entaille (21, 121) en forme de "V" présente un premier secteur angulaire et un second secteur angulaire adjacents, qui sont, de préférence, différents ou de taille égale.

24. Articulation élastique selon l'une des revendications 18 à 23, **caractérisée en ce que** la profondeur de l'entaille (21, 121) est entre environ 0,5 mm et 3 mm.

25. Articulation élastique selon l'une des revendications 18 à 24, **caractérisée en ce que** l'entaille (21, 121) est réalisée sensiblement au niveau du diamètre médian (N) du manchon (13, 113).

26. Articulation élastique selon l'une des revendications 18 à 24, **caractérisée en ce que** l'entaille (21, 121) est décalée par rapport au diamètre médian (N) du manchon (13, 113).

27. Articulation élastique selon l'une des revendications 18 à 26, **caractérisée en ce que** le manchon comporte deux régions d'extrémité et un corps de manchon réalisé d'une pièce avec les régions d'extrémité et au moins une des régions d'extrémité est réalisée avec un épaississement, s'étendant radialement vers l'intérieur, **en ce que** le côté externe de la région d'extrémité avec un épaississement, le côté externe d'une région de transition depuis la région d'extrémité vers le corps du manchon et le côté externe d'au moins un segment du corps du manchon (14) jouxtant la région de transition se situent sensiblement dans un plan concentrique par rapport à l'axe longitudinal.

28. Articulation élastique selon la revendication 27, **caractérisée en ce que** la totalité du côté externe du manchon est sensiblement plan sans épaulement.
